# EUROPEAN PATENT APPLICATION

(11) **EP 2 169 260 A1**
(43) Date of publication of application: **31.03.2010**
(21) Application number: 08360032.0
(22) Date of filing: 26.09.2008
(51) Int. Cl.: F16G 15/08, A01K 27/00, F16B 45/02

(54) **Swifel snap hook**

(71) Applicant: Lin, Pei Chuan, Taichung City 40360 (TW)
(72) Inventor: Lin, Pei Chuan, Taichung City 40360 (TW)
(74) Representative: Metz, Paul

(57) **Abstract**

An environmentally friendly design of swivel snap hook **(10)** is disclosed to include a hook member **(20)** having a journal **(22),** and a swivel **(30)** rotatably coupled to the journal **(22),** which has a U-shaped frame **(31)** and a cross thwart **(36)** detachably fastened to the U-shaped frame **(31)** so that a belt **(40),** cord member, chain or the like is detachably connectable to the swivel **(30).** When the belt **(40)** is dirty or damaged, the cross thwart **(36)** is conveniently detachable from the U-shaped frame **(31)** for allowing separation of the belt **(40)** from the swivel **(30)** for a replacement or for washing.

## Description

### BACKGROUND OF THE INVENTION

### 1. Field of the Invention

The present invention relates to swivel snap hooks and more particularly, to such a swivel snap hook that facilitates disconnection of the connected fabric strap or the like.

### 2. Description of the Related Art

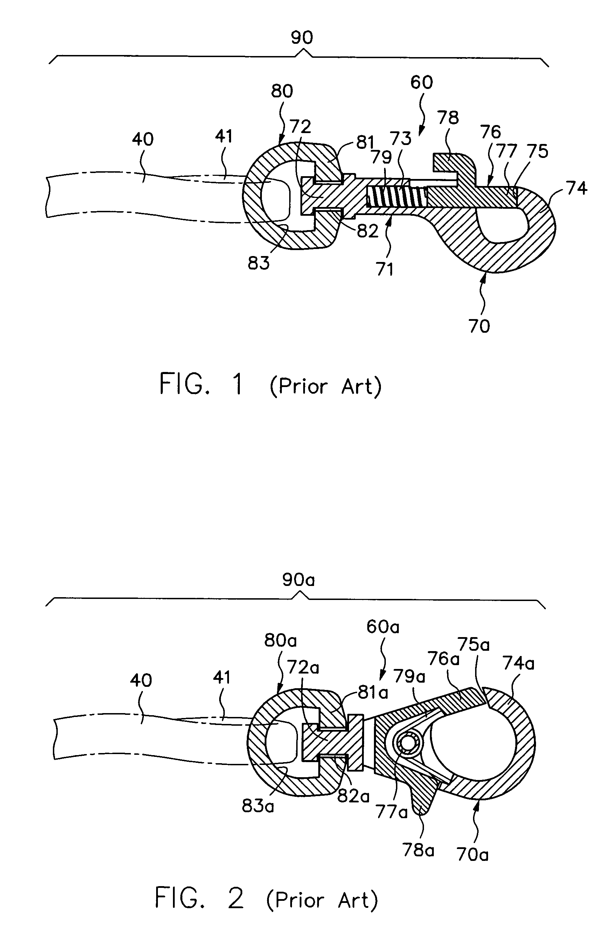

FIG. 1 is a sectional view of a swivel snap hook **60** according to the prior art. According to this design, the swivel snap hook **60** comprises a hook member **70** and a swivel **80.** The hook member **70** comprises a shank **71** that has a journal **72** and a guide hole **73,** a hook body **74** extended from one end of the shank **71** and defining a hook opening **75,** a latch **76** that has an elongated latch body **77** axially movably supported in the guide hole **73** and a handle **78** protruded from the periphery of the elongated latch body **77** for operation by the thumb, and a compression spring **79** mounted inside the guide hole **73** and stopped between the shank **71** and one end of the elongated latch body **77.** The compression spring **79** imparts an outward pressure to the elongated latch body **77,** supporting the latch **76** in a latched position where the elongated latch body **77** closes the hook opening **75.** The swivel **80** has a base **81** that provides an axle hole **82** for the passing of the journal **72** of the hook member **70** so that the swivel **80** is turnable about the journal **72.** Further, the swivel **80** defines a hole **83** for the mounting of a belt **40,** cord member, chain, or the like.

FIG. 2 is a sectional view of another structure of swivel snap hook **60a** according to the prior art. According to this structure, the swivel snap hook **60a** is comprised of a hook member **70a** and a swivel **80a.** The hook member **70a** comprises a journal **72a,** a hook **74a** extending from one end of the journal **72a** and defining a hook opening **75a,** a latch **76a** pivotally connected to the hook member **70a** by a pivot pin **77a** and provided with a handle **78a** for the operation of the thumb, and a torsional spring **79a** supported between the latch **76a** and the hook **74a.** The torsional spring **79a** imparts a biasing force to the latch **76a,** holding the latch **76a** in a latched position closing the hook opening **75a** of the hook **74a.** The swivel **80a** has a base 81a that provides an axle hole **82a** for the passing of the journal **72a** of the hook member **70a** so that the swivel **80a** is turnable about the journal **72a.** Further, the swivel **80a** defines a hole **83a** for the mounting of a belt **40,** cord member, chain, or the like.

The aforesaid swivel snap hook **60 (60a)** is usually used with a belt or the like. When a belt is used with the swivel snap hook **60 (60a),** one free end **41** is inserted through the hole **83 (83a)** of the swivel **80 (80a)** and then turned back and stitched to the belt **40,** and thus the belt **40** and the swivel snap hook **60 (60a)** constitute a pet belt **90 (90a).** During a normal use of the pet belt **90 (90a),** the belt **40** is less durable when compared to the swivel snap hook **60 (60a).**

Because the swivel **80 (80a)** is an enclosed loop member, the belt **40** cannot be detached from the swivel **80 (80a)** for washing or for a replacement when it is contaminated or damaged. In this case, even if the swivel snap hook **60 (60a)** is kept in a good condition, the user usually will discard the pet belt **90 (90a)** and purchase a new one. It is a wasteful way to discard a useful swivel snap hook. Further, purchasing a new pet belt costs a lot.

When the belt **40** of the pet belt **90 (90a)** is damaged, the user may use a cutter to cut off the damaged belt **40.** However, regular pet shops do not sale belts for pet belt separately. Even if a consumer obtains a new belt, it is still difficult to fasten the new belt to the swivel snap hook **60 (60a)** positively beautifully like factory made.

Further, as stated above, during fabrication of the pet belt **90 (90a),** it is necessary to insert one free end **41** of the belt **40** through the hole **83 (83a)** of the swivel **80 (80a)** and then turned back and stitched to the belt **40.** During the stitching operation, the swivel snap hook **60 (60a)** may be tangled with the belt **40,** affecting the fabrication of the pet belt **90 (90a).**

### SUMMARY OF THE INVENTION

The present invention has been accomplished under the circumstances in view.

It is one object of the present invention to provide a swivel snap hook, which allows separation of the attached belt for a replacement or washing when it is dirty or damaged due to a long use, satisfying environmental protection requirements.

It is another object of the present invention to provide a swivel snap hook, which allows installation of a belt that has been processed to provide a mounting loop at one end, facilitating pet belt fabrication.

To achieve these and other objects of the present invention, the swivel snap hook comprises a hook member that has a journal, and a swivel rotatably coupled to the journal of the hook member. The swivel comprises a U-shaped frame and a cross thwart. The U-shaped frame comprises a base that has an axle hole to receive the neck for allowing rotation of the swivel relative to the hook member, two parallel arms respectively extended from two distal ends of the base, and an opening defined between the two parallel arms. The cross thwart detachably connected to the two parallel arms to close the opening of the U-shaped frame.

In one embodiment of the present invention, the cross thwart has one end thereof radially expanded to form a head and an opposite end thereof provided with a male thread. The head defines a tool hole for the positioning of a tool. The two parallel arms of the U-shaped frame each have a distal end. The distal end of one arm of the U-shaped frame has a through hole for the passing of the cross thwart. The distal end of the other arm of the U-shaped frame has a screw hole for receiving the male thread of the cross thwart.

In one embodiment of the present invention, the through hole is a countersunk hole that receives the head of the cross thwart in a flush manner.

### BRIEF DESCRIPTION OF THE DRAWINGS

FIG. 1 is a sectional view of a swivel snap hook according to the prior art.
FIG. 2 is a sectional view of another structure of swivel snap hook according to the prior art.
FIG. 3 is an elevational view of a swivel snap hook in accordance with the present invention.
FIG. 4 is a plain view of the swivel snap hook shown in FIG. 3.
FIG. 5 is a sectional view of the swivel snap hook shown in FIG. 3.
FIG. 6 is an exploded view of a part of the swivel snap hook shown in FIG. 3.

### DETAILED DESCRIPTION OF THE PREFERRED EMBODIMENT

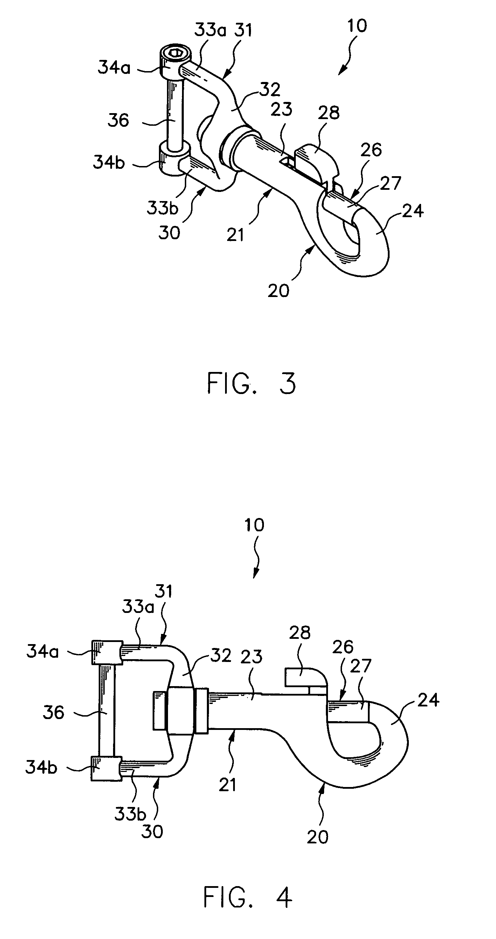

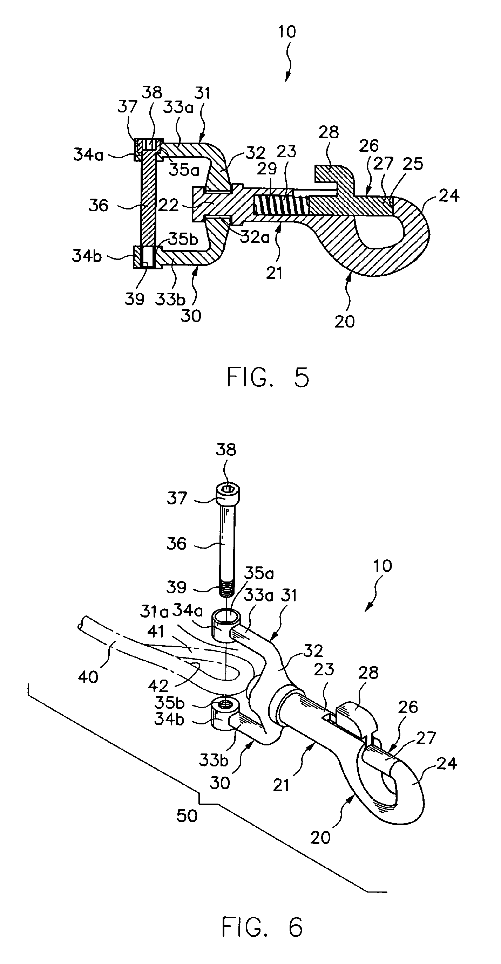

FIG. 3 is an elevational view of a swivel snap hook in accordance with the present invention. FIG. 4 is a plain view of the swivel snap hook shown in FIG. 3. FIG. 5 is a sectional view of the swivel snap hook shown in FIG. 3. FIG. 6 is an exploded view of a part of the swivel snap hook shown in FIG. 3. This structure of swivel snap hook **10** is comprised of a hook member **20** and a swivel **30.**

The hook member **20** comprises a shank **21** that has a journal **22** and a guide hole **23,** a hook body **24** extended from one end of the shank **21** and defining a hook opening **25,** a latch **26** that has an elongated latch body **27** axially movably supported in the guide hole **23** and a handle **28** protruded from the periphery of the elongated latch body **27** for operation by the thumb, and a compression spring **29** mounted inside the guide hole **23** and stopped between the shank **21** and one end of the elongated latch body **27.** The compression spring **29** imparts an outward pressure to the elongated latch body **27,** supporting the latch **26** in a latched position where the elongated latch body **27** closes the hook opening **25.**

The swivel **30** is rotatably coupled to the journal **22** of the shank **21** of the hook member **20** for the mounting of a fabric strap or the like. The way how to couple the swivel **30** to the journal **22** is not within the scope of the discussion of the present invention, and therefore no further detailed description in this regard is necessary. The swivel **30** comprises a U-shaped frame **31** and a cross thwart **36.** The U-shaped frame **31** comprises a base **32** defining a center axle hole **32a** that receives the journal **22** of the shank **21** of the hook member **20** for allowing rotation of the swivel **30** relative to the hook member **20,** two parallel arms **33a** and **33b** respectively perpendicularly extended from two distal ends of the base **32,** and an opening **31a** defined between the two parallel arms **33a** and **33b.** The cross thwart **36** is detachably fastened to the U-shaped frame **31** at one side opposite to the base **32** by any known technique to close the opening **31a.** According to the present preferred embodiment, the cross thwart **36** is a rod member having two opposite ends. One end of the cross thwart **36** is radially expanded, forming a head **37** that defines a tool notch **38** for receiving a wrench or screwdriver. The other end of the cross thwart **36** is provided with a male thread **39.** Briefly speaking, the cross thwart **36** is a screw bolt. To match the use of the cross thwart **36,** the two parallel arms **33a** and **33b** of the U-shaped frame **31** have the respective free end terminating in a barrel **34a** and **34b.** The barrel **34a** of one arm **33a** defines a hole **35a** for the passing of the cross thwart **36.** The barrel **34b** of the other arm **33b** defines a screw hole **35b** for receiving the male thread **39** of the cross thwart **36.** Thus, the cross thwart **36** can easily be installed in the two parallel arms **33a** and **33b** of the U-shaped frame **31,** or easily be detached from the U-shaped frame **31.**

The hole **35a** according to the present preferred embodiment is a countersunk hole so that the head **37** of the cross thwart **36** can be received in the hole **35a** inside the barrel **34a** in a flush manner, causing a sense of beauty and assuring safety use.

When making a pet belt **50,** as shown in FIG. 6, one free end **41** of a belt **40** is turned back and then fastened to the belt **40** with stitches or any fastening means to form a loop **42,** and then the cross thwart **36** is inserted through the hole **35a** of the U-shaped frame **31** and the loop **42** of the belt **40** and then rotated to fasten the male thread **39** to the screw hole **35b.** Thus, the cross thwart **36** and the U-shaped frame **31** are fastened together to form the swivel **30** and, the belt **40** is secured to the swivel **30,** and therefore the desired pet belt **50** is obtained.

As stated above, when fastening a belt **40** to the swivel snap hook **10** to make a pet belt **50,** the belt **40** is processed to provide a loop **42** before installation in the swivel snap hook **10.** When stitching the desired loop **42,** the belt **40** is kept apart from the swivel snap hook **10.** Therefore, the invention facilitates the fabrication of the pet belt **50.** Further, if the belt **40** is covered with dirt or damaged after a long use of the pet belt **50,** the cross thwart **36** can conveniently be detached from the U-shaped frame **31** so that the belt **40** can be removed from the swivel snap hook **10** for washing or for a replacement without throwing the swivel snap hook **10** away. Therefore, the invention saves the cost and is environmentally friendly.

In commercial applications, one swivel snap hook **10** can be arranged with multiple belts of different colors as one packet for sale so that a consumer can selectively fasten either one of the attached color belts to the swivel snap hook **10** to constitute a pet belt, and conveniently change the color belt of the pet belt when desired.

Although a particular embodiment of the invention has been described in detail for purposes of illustration, various modifications and enhancements may be made without departing from the spirit and scope of the invention. For example, the swivel **30** of the present invention can be used with the hook member **70a** shown in FIG. 2 to constitute a snap swivel hook. Accordingly, the invention is not to be limited except as by the appended claims.

## Claims

1. A swivel snap hook **(10),** comprising a hook member **(20)** that has a journal **(22),** and a swivel **(30)** rotatably coupled to said journal **(22); characterized in that** said swivel **(30)** comprises:
a U-shaped frame **(31)** comprising a base **(32)** having an axle hole **(32a)** to receive said journal **(22)** for allowing rotation of said swivel retainer **(30)** relative to said hook member **(20),** two arms **(33a, 33b)** respectively extended from said base **(32),** and an opening **(31 a)** defined between said two arms **(33a, 33b);** and
a cross thwart **(36)** detachably connected to said two arms **(33a, 33b)** to close said opening **(31 a).**

2. The swivel snap hook **(10)** as claimed in claim 1, wherein said cross thwart (36) has one end thereof radially expanded to form a head **(37)** and an opposite end thereof provided with a male thread **(39),** said head **(37)** defining a tool hole **(38)** for the positioning of a tool; said two arms **(33a, 33b)** each have a distal end **(34a, 34b),** the distal end **(34a)** of one of said two arms **(33a, 33b)** comprises a through hole **(35a)** for the passing of said cross thwart **(36),** the distal end **(34b)** of the other of said two arms **(33a, 33b)** comprises a screw hole **(35b)** for receiving said male thread **(39).**

3. The swivel snap hook **(10)** as claimed in claim 2, wherein said through hole **(35a)** is a countersunk hole that receives said head **(37)** in a flush manner.
